# EUROPÄISCHE PATENTSCHRIFT

(11) **EP 3 051 310 B1**
(45) Veröffentlichungstag und Bekanntmachung des Hinweises auf die Patenterteilung: **01.03.2017**
(21) Anmeldenummer: 15152921.1
(22) Anmeldetag: 28.01.2015
(51) Int. Cl.: G01S 17/02, G01S 17/42, G01S 17/66, G01S 17/87, G01S 17/88, G08B 13/181, G01S 7/481

(54) **Vorrichtung zum Objektschutz mittels Laserscannern**
Device for the protection of objects by means of laser scanners
Dispositif de protection d'objet à l'aide de scanners laser

(43) Veröffentlichungstag der Anmeldung: 03.08.2016
(73) Patentinhaber: Riegl Laser Measurement Systems GmbH, 3580 Horn (AT)
(72) Erfinder: Pfenningbauer, Martin, 3430 Tulln (AT); Riegl, Johannes, 3754 Trabenreith (AT); Riegl, Ursula, 1010 Wien (AT)
(74) Vertreter: Weiser, Andreas

(56) Entgegenhaltungen:
- EP-A1- 1 843 176
- EP-A2- 0 342 037
- AT-B1- 510 296
- US-A1- 2002 080 046

## Beschreibung

Die vorliegende Erfindung betrifft eine Vorrichtung zum Objektschutz mit zumindest zwei Laserscannern, welche dafür ausgebildet sind, jeweils einen dem Objekt vorgelagerten Laserstrahl-Scanfächer auszustrahlen und ein Durchdringen des Scanfächers zu detektieren.

Solche Laserscanner, welche nach einem Laufzeit-Messprinzip arbeiten, werden heute auf vielen Gebieten eingesetzt; sie bestimmen die Laufzeit des Laserstrahls und seiner Reflexion an einem den Scanfächer durchdringenden Körper, um daraus und aus dem Abstrahlwinkel des Laserstrahls auf die räumliche Position des Körpers rückzuschließen. Der Laserstrahl ist dabei entweder gepulst oder ein modulierter Dauerstrich-Laserstrahl; eine solche Laserstrahlen-Impulsfolge oder der modulierter Dauerstrich-Laserstrahl wird meist von einem rotierenden Spiegel in seiner Richtung verschwenkt, wodurch der Laserstrahl-Scanfächer gebildet wird.

Zum Objektschutz ist es bekannt, derartige Laserscanner am Objekt selbst und/oder an dem Objekt vorgelagerten Pfosten zu montieren, wobei deren Scanfächer gerade oder schräg zum Boden hinab oder, bei ausreichend geringer Montagehöhe, etwa parallel zum Boden ausgerichtet sind. Dadurch kann ein Körper beim Durchdringen des Scanfächers anhand seiner Reflexion detektiert werden; jedoch erfordern derartige Vorrichtungen bei einem komplexen Grundriss des zu schützendes Objekts eine sehr hohe Anzahl von Laserscannern und können naturgemäß sehr einfach überflogen werden.

Aus der US2002080046 ist eine Laserüberwachung einer Start- und Landebahn bekannt, die nach dem Lichtschrankenprinzip arbeitet.

Aus der EP 0 532 976 A1 ist eine Laserüberwachungseinrichtung mit einem Lasersender bekannt, der an einem Mast hoch über dem zu schützenden Objekt rotiert und dabei Laserstrahlen dreidimensional kegelförmig nach unten aussendet, um den Raum rund um das Objekt auf Eindringlinge zu überwachen. Es versteht sich, dass dabei nur eine sehr geringe örtliche und/oder zeitliche Auslösung erzielbar ist, da insbesondere bei größeren Objekten, z.B. im Objektschutz bei Kraftwerken, der überwachte Raum sehr groß ist. Eine Vervielfachung der eingesetzten Lasersender zur Erzielung einer besseren Auflösung ist hingegen nur sehr begrenzt möglich, da bei einer hohen Anzahl von Lasersendern eine korrekte Zuordnung der laufend jedenfalls am Boden auftretenden Reflexionen kaum mehr möglich ist; außerdem wäre der Bauaufwand für eine solche Einrichtung mit einer Vielzahl von Lasersendern und dem diese tragenden Mast sehr hoch.

Die Erfindung setzt sich zum Ziel, eine Vorrichtung zum Objektschutz zu schaffen, welche auch flugfähige Eindringlinge zuverlässig erkennt und dabei konstruktiv einfach und rasch einsetzbar ist.

Dieses Ziel wird mit einer Vorrichtung der einleitend genannten Art erreicht, welche sich erfindungsgemäß dadurch auszeichnet, das die Laserscanner am Boden neben dem Objekt mit nach oben, zumindest einer davon schräg nach oben, und einander schneidend ausgerichteten Scanfächern angeordnet sind, wobei die Scanfächer eine geschlossene, das Objekt einhüllende Scanhaube bilden.

Der hier verwendete Begriff "Boden" umfasst dabei auch jegliche Bodeninstallationen wie Stützen, Pfeiler, Zäune, Mauern, Mauerkränze usw., auf denen die Laserscanner montiert sein können.

Eine solche Anordnung und Ausrichtung der Laserscanner rings um das Objekt ist sehr einfach installierbar und skalierbar, um an veränderte Bedingungen angepasst zu werden. Ferner erübrigt das geschlossene Einhüllen des zu schützenden Objekts mit Hilfe der Scanfächer nach Art eines Schutzmantels bzw. einer Schutzhaube ein wesentlich aufwändigeres dreidimensionales Überwachen eines gesamten Volumens mit einer Vielzahl von Laserstrahlen, und fliegende, fahrende und - wenn auch bodennahen Abschattungen vorgebeugt wird - am Boden laufende Körper werden gleichermaßen sicher detektiert. Fehldetektionen, z.B. durch Vögel oder auch am Boden laufende Tiere, können dabei wie aus dem Stand der Technik bekannt - beispielsweise anhand ihrer Körpergröße - vermieden werden. Durch günstige Anordnung und Ausrichtung der Laserscanner sowie durch geeignete Wahl ihrer Anzahl kann eine gleichsam beliebige Zeit- und Ortsauflösung erzielt werden, ohne dass dazu aufwändige Baumaßnahmen zu treffen sind.

Um die Entfernung eines reflektierenden Körpers vom Laserscanner korrekt zuordnen zu können, indem Reflexionen eines früher ausgesendeten Laserstrahls nicht zu unrecht einem später ausgesendeten Laserstrahl zugeordnet werden, sind die Laserscanner bevorzugt MTA-Zonen-selektive Laserscanner. MTA-Zonen werden bei einem Pulslaser durch die Impulsfolge bzw. bei einem frequenzmodulierten Dauerstrich-Laser durch die Periode der Frequenzmodulation festgelegt: Wird die Reflektion eines Laserstrahls erst detektiert, nachdem bereits der folgende Laserstrahl, d.h. Laserimpuls bzw. die gleiche wiederkehrende Modulationsfrequenz, ausgestrahlt wurde, sind also mehrere Laserstrahlen gleichzeitig in der Luft, was als "multiple-time-around" (MTA) bezeichnet wird, so ordnet ein MTA-Zonenselektiver Laserscanner diese Reflexion richtigerweise dem früher ausgesendeten Laserstrahl zu und bestimmt somit die Entfernung des reflektierenden Körpers korrekt, wogegen ein herkömmlicher Laserscanner jede Reflektion dem jeweils direkt zuvor ausgesendeten Laserstrahl zuordnen würde und den reflektierenden Körper folglich fälschlicherweise wesentlich näher detektieren würde. Die Unterscheidung von MTA-Zonen ist beispielsweise durch unterschiedliche Modulation, Polarisation oder Codierung der Laserstrahlen oder aber mit variierenden Impulsabständen bzw. Modulationsraten möglich, wie dies beispielsweise aus den Schriften AT 510 296 B1, AT 511 310 B1 bzw. AT 513 402 B1 derselben Anmelderin bekannt ist.

Besonders günstig ist es, wenn jeder Laserscanner dafür ausgebildet ist, die Position des Durchdringens zu ermitteln und nur dann ein Durchdringen zu detektieren, wenn die ermittelte Position innerhalb eines vorgegebenen, durch die anderen Scanfächer der Scanhaube definierten Bereichs des Scanfächers liegt. Auf diese Weise ist der tatsächlich in Betracht gezogene Bereich jedes Scanfächers klar begrenzt; Fehldetektionen, z.B. von außerhalb der Scanhaube vorbeifliegenden Objekten, werden so ausgeblendet. Ferner kann dadurch die zeitliche und örtliche Auflösung jedes Laserscanners bzw. seines Scanfächers optimiert werden, indem z.B. beim Scannen die Scangeschwindigkeit, d.h. die Geschwindigkeit des Verschwenkens, an die jeweilige Größe seines Bereichs angepasst wird. Werden dabei MTA-Zonen-selektive Laserscanner eingesetzt, so sind solche Bereiche besonders präzise und flexibel definierbar. In einer vorteilhaften Variante sind die vorgegebenen Bereiche in einer mit den Laserscannern in Verbindung stehenden Datenbanken hinterlegt. Dadurch können die Bereiche, z.B. aus einem 3D-Modell der Scanhaube, rasch für alle Laserscanner vorgegeben werden und so auch auf Veränderungen rasch reagiert werden.

Gemäß einer günstigen Ausführungsform der Erfindung sind am Boden neben dem Objekt weitere Laserscanner mit nach oben, zumindest einer davon schräg nach oben, und einander schneidend ausgerichteten Scanfächern angeordnet, wobei die Scanfächer eine geschlossene, die genannte Scanhaube einhüllende weitere Scanhaube bilden. So wird eine gleichsam doppelte einhüllende Scanhaube gebildet, um beispielsweise, schon bevor die Scanhaube durchdrungen wird, ein Durchdringen der einhüllenden weiteren Scanhaube für eine Vorwarnung zu nutzen und erst bei folgendem Durchdringen der Scanhaube selbst eine Warnung oder einen Alarm auszulösen. Ferner wird dadurch die Ausfallssicherheit der Vorrichtung durch Redundanz erhöht und die Wahrscheinlichkeit von Fehlalarmen reduziert.

Um unabhängig vom Ort des Durchdringens der Scanhauben gleiche Abläufe zwischen Vorwarnung und Warnung zu haben, ist es günstig, wenn die weitere Scanhaube von der Scanhaube ringsum etwa gleich weit beabstandet ist. Alternativ dazu können die Scanhaube und die weitere Scanhaube etwa gleiche Spannweite, jedoch verschiedene Höhe haben. In diesem Fall können die jeweiligen Laserscanner der verschiedenen Scanhauben nahe beisammen angeordnet und nur verschieden ausgerichtet werden, was den Installationsaufwand reduziert.

Besonders günstig ist es, wenn sich die beiden Scanhauben voneinander in den Wellenlängenbereichen der sie jeweils bildenden Scanfächer unterscheiden. Auf diese Weise kann beispielsweise ein in Tarnkappentechnik aufgebauter Körper bei seinem Durchdringen zumindest einer der beiden Scanhauben und somit zuverlässiger detektiert werden, da eine solche Tarnkappentechnik nicht in gleich großer Wirksamkeit für zwei geeignet verschiedene Wellenlängen umsetzbar ist. Ferner können die Laserscanner zumindest einer der beiden Scanhauben sichtbare Laserstrahlen ausstrahlen, wodurch eine gewisse abschreckende Wirkung erzielt bzw. über eine zweite, aus unsichtbaren Laserstrahlen gebildete Scanhaube hinweggetäuscht wird.

Bevorzugt umfasst die Vorrichtung eine an die Laserscanner angeschlossene Auswerteeinheit zum Ermitteln von Richtung und/oder Geschwindigkeit eines die Scanhauben durchdringenden Körpers anhand von aufeinanderfolgenden Detektionen in den beiden Scanhauben. Auf diese Weise können gezielt Schutz- bzw. Abwehrmaßnahmen getroffen werden, soweit dies als erforderlich betrachtet wird.

Besonders vorteilhaft ist es, wenn der Scanfächer zumindest eines der Laserscanner zwischen einer ersten, steileren Ausrichtung und einer zweiten, flacheren Ausrichtung kippbar ist. So können je nach Bedarf verschieden große Scanhauben gebildet werden. Dazu umfasst die Vorrichtung bevorzugt eine Ansteuereinheit, welche dazu ausgebildet ist, nach Detektion eines Durchdringens des Scanfächers in der ersten Ausrichtung diesen in die zweite Ausrichtung zu kippen. Auf diese Weise ist in ähnlicher Form wie in zwei Scanhauben ein Vorwarnen und ggf. folgendes Warnen bei nochmaligen Durchdringen des Scanfächers in der zweiten Ausrichtung möglich. Ferner ist es dabei günstig, wenn die Vorrichtung eine Auswerteeinheit zum Ermitteln von Richtung und/oder Geschwindigkeit eines einen Scanfächer durchdringenden Körpers anhand von aufeinanderfolgenden Detektionen vor und nach dem Kippen des Scanfächers umfasst. Anhand einer auf diese Weise ermittelten Trajektorie eines den Scanfächer durchdringenden Körpers können wie weiter oben ausgeführt gezielte Folgemaßnahmen gesetzt werden.

Um die örtliche und zeitliche Auflösung der Laserscanner der Vorrichtung weiter zu verbessern, ist es besonders vorteilhaft, wenn die zumindest eine Scanhaube durch erste und zweite Laserscanner gebildet ist, wobei die ersten Laserscanner im Vergleich zu den zweiten jeweils einen Scanfächer mit kleinerem Fächerwinkel haben und die zweiten Laserscanner zwischen zwei benachbarten ersten Laserscannern verbleibende Zwickel schließen. Auf diese Weise können Scanhauben praktisch beliebiger geometrischer Form erzeugt und kann dabei die Auflösung in jedem Bereich der Scanhaube unabhängig von den anderen Bereichen optimiert werden.

Gemäß einer weiteren günstigen Ausführungsform hat zumindest einer der Laserscanner einen kegelmantelsektorförmig gekrümmten Scanfächer. Auf diese Weise kann bereits mit zwei Laserscannern eine geschlossene, das Objekt einhüllende Scanhaube und/oder eine Scanhaube komplexer Form gebildet werden, wobei der Laserscanner gleichsam in der Spitze des Kegelmantelsektors sitzt. Alternativ dazu hat jeder Laserscanner einen ebenen Scanfächer, wobei jede Scanhaube durch die Scanfächer zumindest dreier Laserscanner gebildet ist. Dies ergibt Laserscanner einfacher Bauform; ferner ist dabei ein gezieltes Anordnen der Laserscanner einfacher bewerkstelligbar.

In einer weiteren vorteilhaften Variante zum Einhüllen eines langgestreckten Objekts sind entlang dessen Längsseiten jeweils zumindest zwei Laserscanner angeordnet. Bei einer solchen Anordnung einer passenden Anzahl von Laserscannern können Objekte gleichsam beliebiger Längserstreckung, z.B. Bahnhöfe oder andere Bahnanlagen, Straßen bzw. Straßenabschnitte, Flugzeug-Lande- bzw. Startbahnen, Pipelines od. dgl., überwacht bzw. geschützt werden.

Die Erfindung wird nachfolgend anhand von in den beigeschlossenen Zeichnungen dargestellten Beispielen näher erläutert. In den Zeichnungen zeigen:
die Fig. 1 bis 4 verschiedene Ausführungsformen einer Vorrichtung zum Objektschutz mit erfindungsgemäßen Scanhauben gebildet durch drei ebene, jeweils schräg nach oben gerichtete und einander schneidende Scanfächer (Fig. 1), durch drei nach oben gerichtete und einen schräg nach oben gerichteten, einander schneidende Scanfächer (Fig. 2), durch mehrere dachförmig einander schneidende Scanfächer (Fig. 3) bzw. durch zwei schräg nach oben gerichtete kegelmantelsektorförmig gekrümmte, einander schneidende Scanfächer (Fig. 4), jeweils in einer Perspektivansicht von schräg oben;
die Fig. 5a und 5b Varianten der Vorrichtungen nach einer der Fig. 1 bis 4 in einem schematischen Blockschaltbild;
Fig. 6 die Vorrichtung von Fig. 1 mit definierten Bereichen der Scanfächer in einer Seitenansicht;
die Fig. 7a und 7b eine Weiterbildung der Vorrichtung von Fig. 1 mit einer weiteren Scanhaube, welche zu jener aus Fig. 1 parallel ist (Fig. 7a) bzw. gleiche Spannweite, jedoch verschiedene Höhe hat (Fig. 7b), jeweils in einem Querschnitt;
Fig. 8 eine weitere Variante der Vorrichtung von Fig. 1 mit zwei kippbaren Scanfächern in einem Querschnitt; und
die Fig. 9a und 9b weitere Varianten der Vorrichtungen gemäß einer der Fig. 1 bis 3 mit verschieden weit auffächerbaren Scanfächern, einmal ohne (Fig. 9a) und einmal mit (Fig. 9b) bereichsabhängiger Positionsermittlung, jeweils in einer vereinfachten flächig abgewickelten Darstellung.

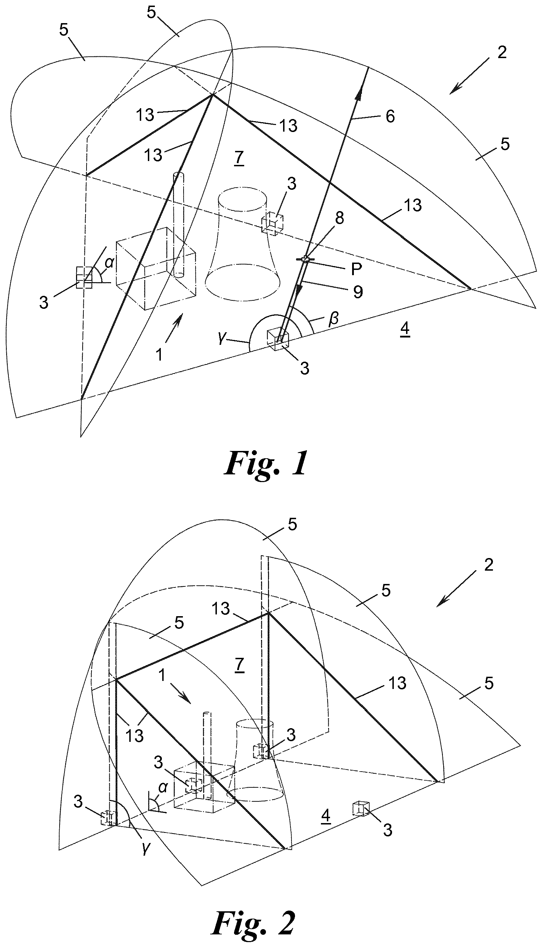

Gemäß Fig. 1 wird ein Objekt 1, z.B. ein Kraftwerk od. dgl., mit Hilfe einer Vorrichtung 2 geschützt, welche zumindest zwei, im Beispiel von Fig. 1 drei, Laserscanner 3 umfasst. Die Laserscanner 3 sind am Boden 4 neben dem Objekt 1 um dieses herum angeordnet und strahlen jeweils einen dem Objekt 1 vorgelagerten Laserstrahl-Scanfächer 5 aus. Jeder Scanfächer 5 wird durch fortgesetztes Umlenken ausgesendeter Laserstrahlen 6 erzeugt, z.B. durch Verschwenken eines Umlenkspiegels (nicht gezeigt), wie aus dem Stand der Technik bekannt.

Im Beispiel von Fig. 1 sind die Scanfächer 5 aller Laserscanner 3 eben und schräg nach oben ausgerichtet, d.h. sie haben gegenüber dem Boden 4 einen Neigungswinkel α von weniger als 90°, und die ausgestrahlten Laserstrahlen 6 haben im Scanfächer 5 einen Ausstrahlwinkel β, der beim genannten Verschwenken innerhalb eines Fächerwinkels γ von ca. 180° variiert, sodass jeder Laserscanner 3 auf beiden Seiten jeweils bis etwa zum Boden 4 scannt. Es versteht sich, dass dabei zumindest einige der Laserscanner 3 z.B. auf einem Pfeiler, einem das Objekt 1 umgebenden Mauerkranz etc. angeordnet sein können, welche Untergründe für die Belange der vorliegenden Beschreibung von dem Begriff "Boden" mitumfasst sind. Dabei schneiden einander die Scanfächer 5 und bilden so eine geschlossene, das Objekt 1 einhüllende etwa pyramidenförmige Scanhaube 7.

Durchdringt ein Körper 8, z.B. eine Person, ein Fahrzeug oder gemäß Fig. 1 ein unbemanntes Fluggerät, einen der Scanfächer 5, so detektiert der diesen Scanfächer 5 ausstrahlende Laserscanner 3 das Durchdringen anhand einer am Körper 8 auftretenden Reflexion 9 eines den Körper 8 treffenden Laserstrahls 6. Der Laserscanner 3 ermittelt dazu aus Laufzeit des Laserstrahls 6 und seiner Reflexion 9 und dem Ausstrahlwinkel β (in Kenntnis seiner eigenen Position und des Neigungswinkels α) die Position P des Körpers 8 beim Durchdringen des Scanfächers 5.

Die Fig. 2 bis 4 zeigen alternative Varianten der Vorrichtung 2, welche sich durch Anordnung und Ausrichtung der Laserscanner 3 vom Beispiel der Fig. 1 unterscheiden. Gemäß Fig. 2 sind die Scanfächer 5 des hinteren, linken und vorderen Laserscanners 3 jeweils etwa gerade nach oben ausgerichtet, d.h. sie haben einen Neigungswinkel α von etwa 90°, und nur zumindest ein Scanfächer 5 - im Beispiel von Fig. 2 der Scanfächer 5 des rechten Laserscanners 3 - hat einen schräg nach oben ausgerichteten Scanfächer 5. Ferner sind im Beispiel von Fig. 2 die Fächerwinkel γ des vorderen und hinteren Laserscanners 3 auf jeweils etwa 90° begrenzt. Auch auf diese Weise bilden die Scanfächer 5 in Beispiel von Fig. 2 eine geschlossene, das Objekt 1 einhüllende, hier zeltdachförmige Scanhaube 7.

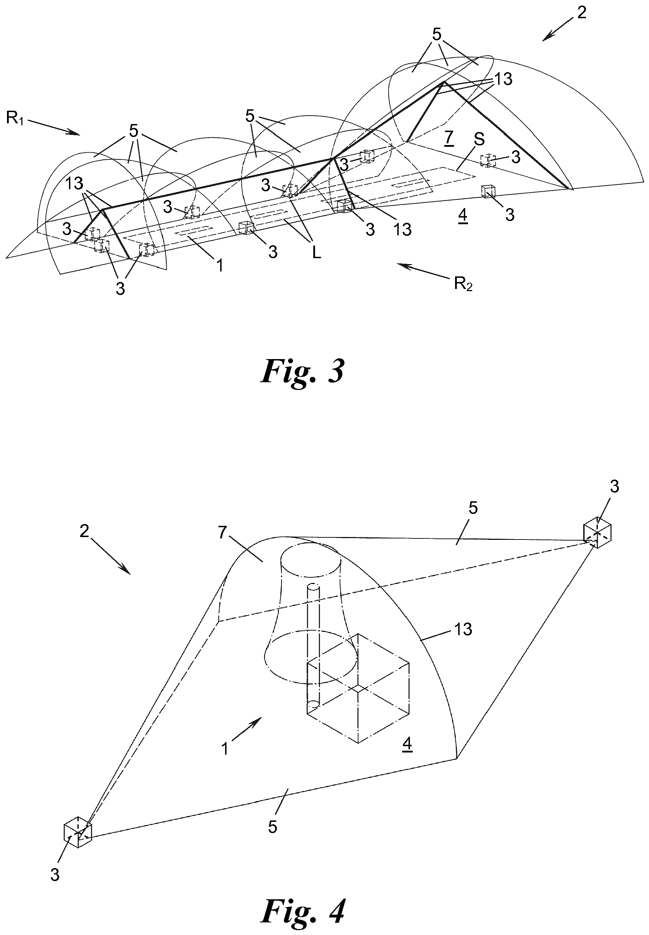

Die Scanhaube 7 des Beispiels von Fig. 3 hüllt ein langgestrecktes Objekt 1, z.B. einen Bahnhof oder eine andere Bahnanlage, eine Straße bzw. einen Straßenabschnitt, eine Brücke oder Pipeline etc., im Beispiel von Fig. 3 eine Flugzeug-Start- und Landebahn, ein. Dazu sind entlang der Längsseiten L des Objekts 1 jeweils zumindest zwei (hier: vier) Laserscanner 3 angeordnet und bilden so zwei zueinander etwa parallele Reihen R₁, R₂ von Laserscannern 3. Die Scanfächer 5 einer Reihe R₁ sind dabei zueinander im Wesentlichen parallel ausgerichtet und schneiden jene der anderen Reihe R₂, sodass eine etwa satteldachförmige Scanhaube 7 gebildet ist, welche an jedem Ende der beiden Reihen R₁, R₂ bzw. an den Schmalseiten S des Objekts 1 von zumindest jeweils einem etwa quer dazu nach oben oder schräg nach oben ausgerichteten Scanfächer 5 geschlossen ist.

Wenn gewünscht, können ferner z.B. an zumindest einem Ende jeder Reihe R₁, R₂ Scanfächer 5 ein wenig nach außen geschwenkt sein, wie im Beispiel von Fig. 3 anhand der hintenliegenden Scanfächer 5 dargestellt, sodass die Scanhaube 7 an dieser Stelle vergrößert ist, beispielsweise um ein abfliegendes oder landendes Flugzeug auch in der Luft erfassen zu können. In diesem Beispiel können Flugzeuge von anderen, unerwünscht die Scanhaube 7 durchdringenden Flugobjekten z.B. anhand des für Flugzeuge bekannten Durchtrittszeitpunkts oder anhand der Größe und/oder Form, welche von den Laserscannern 3 in bekannter Weise ermittelt wird, unterschieden und dadurch Fehldetektionen vermieden werden.

Fig. 4 zeigt eine Variante, bei welcher zumindest einer der Laserscanner 3, deren Scanfächer 5 das Objekt 1 einhüllen, einen kegelmantelsektorförmig gekrümmten Scanfächer 5 hat, sodass bereits zwei Laserscanner 3 zur Bildung der hier kuppelförmigen Scanhaube 7 genügen. Es versteht sich, dass in Abwandlung dieses Beispiels einer der beiden Laserscanner 3 einen ebenen Scanfächer 5 haben kann und dabei schräg nach oben oder auch gerade nach oben ausgerichtet sein könnte und/oder die Scanhaube 7 mit mehr als zwei Laserscannern 3 gebildet werden kann.

Die Beispiele der Fig. 1 bis 4 lassen erkennen, dass in großer, über die Beispiele hinausgehender Formenvielfalt Scanhauben 7 aus gleichartigen oder verschiedenen Scanfächern 5 gebildet werden können, solange eine solche Scanhaube 7 das Objekt 1 geschlossen umhüllt.

Als Laserstrahlen 6 können, wie dem Fachmann bekannt, einerseits gepulste Laserstrahlen 6 oder andererseits frequenzmodulierte Dauerstrich-Laserstrahlen 6 eingesetzt werden.

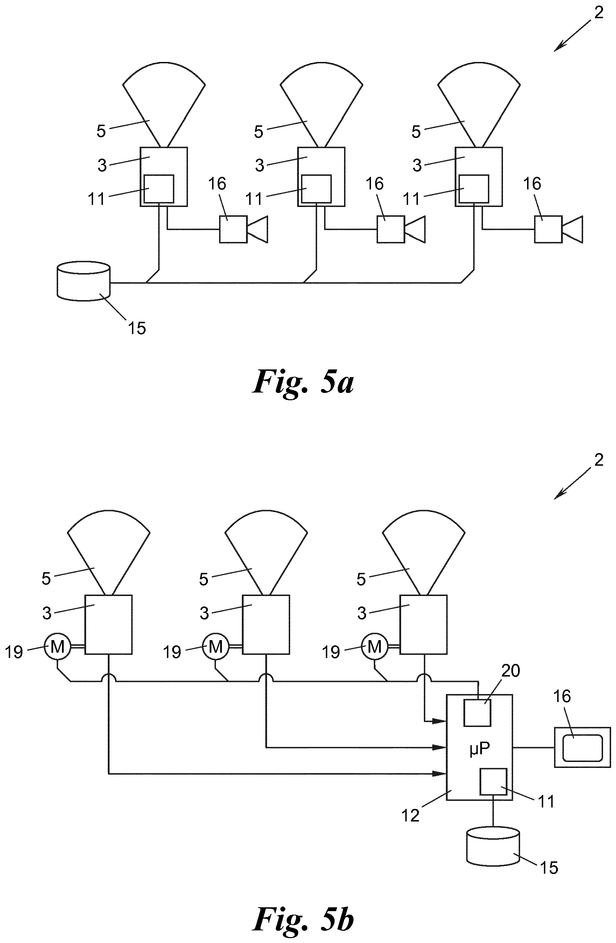

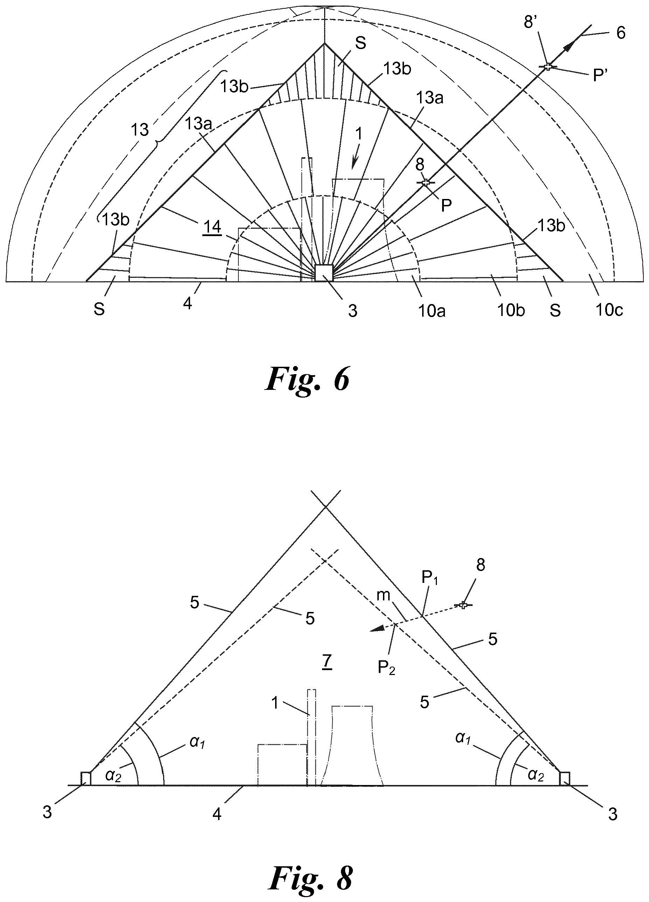

Anhand der Fig. 5a, 5b und 6 wird in der Folge das Detektieren des Durchdringens eines aus gepulsten Laserstrahlen 6 gebildeten Scanfächers 5 näher erläutert, wobei diese Erläuterung für frequenzmodulierte Dauerstrich-Laserstrahlen 6 sinngemäß gültig ist. Voranzuschicken ist, dass die in den Fig. 1 bis 4 und 6 als Kreissektoren dargestellten Scanfächer 5 in der Realität in Ausstrahlrichtung der Laserstrahlen 6 nicht begrenzt sind, sondern lediglich die empfangene Energie einer möglichen Reflexion 9 mit der Entfernung des reflektierenden Körpers 8 vom Laserscanner 3 abnimmt, sodass bei sehr großer Entfernung eine Reflexion praktisch nicht mehr erkennbar ist.

Um eine hohe zeitliche und örtliche Auflösung zu erzielen, ist es wünschenswert, dass jeder Laserscanner 3 Laserstrahlen 6 in rascher Impulsfolge (bzw. hoher Frequenzmodulationsrate) aussendet. Treten dabei Reflexionen 9 von einem Körper 8 erst nach dem Aussenden zumindest eines weiteren Laserimpulses auf, sind also mehrere Laserimpulse bzw. deren Reflexionen 9 gleichzeitig zwischen Laserscanner 3 und Körper 8 in der Luft, so spricht man von einer "multiple-time-around"-Situation (MTA-Situation). Dabei ist für eine korrekte Bestimmung der Position P des Körpers 8 die von diesem empfangene Reflexion 9 dem richtigen Sendeimpuls bzw. ausgesendeten Laserstrahl 6 zuzuordnen, wie im Folgenden erläutert wird.

Aus dem Stand der Technik ist bekannt, in Abhängigkeit von der Entfernung vom Laserscanner 3 sog. MTA-Zonen zu definieren, u.zw. eine MTA-Zone 0 (in Fig. 6 mit 10a bezeichnet), aus welcher eine Reflexion des zuletzt ausgesendeten Laserimpulses empfangen würde, eine MTA-Zone 1 (in Fig. 6 mit 10b bezeichnet), aus welcher eine Reflexion des direkt davor ausgesendeten (vorletzten) Laserimpulses empfangen würde, eine MTA-Zone 2 (in Fig. 6 mit 10c bezeichnet), aus welcher eine Reflexion des vorvorletzten Laserimpulses empfangen würde, usw. usf. Zur Unterscheidung von Reflexionen 9 aus verschiedenen MTA-Zonen 0 (10a), 1 (10b), 2 (10c) können die aufeinanderfolgenden Laserimpulse in einem ausgesendeten Laserstrahl 6 z.B. unterschiedlich moduliert oder codiert sein, wie dies z.B. in den Patentschriften AT 510 296 B1, AT 511 310 B1 bzw. AT 513 402 B1 derselben Anmelderin erläutert wird.

Die Laserscanner 3 gemäß Fig. 5a sind demgemäß bevorzugt "MTA-Zonen-selektive" Laserscanner 3, d.h. Laserscanner 3, die empfangene Reflexionen 9 der jeweils richtigen MTA-Zone 0, 1, 2 etc. zuordnen, wobei jeder der Laserscanner 3 eine MTA-Selektionseinheit 11 hat. Es versteht sich, dass eine MTA-Zonen-selektive Auswertung alternativ auch in einer zentralen Auswerteeinheit 12 gemäß Fig. 5b erfolgen kann, welche die erforderliche Informationen von den Laserscannern 3 erhält.

In den Beispielen der Fig. 1 und 6 bilden Schnittlinien 13 der Scanfächer 5 gleichsam Kanten der Scanhaube 7. Jeder Laserscanner 3 ermittelt die Position P des Durchdringens seines Scanfächers 5 durch einen Körper 8 wie weiter oben erläutert und detektiert, wenn gewünscht, nur dann ein Durchdringen der Scanhaube 7, wenn die ermittelte Position P innerhalb eines durch die Schnittlinien 13 vorgegebenen, d.h. durch die anderen Scanfächer 5 der Scanhaube 7 definierten Bereichs 14 seines Scanfächers 5 liegt. Gemäß dem Beispiel von Fig. 6 liegen die MTA-Zonen 0, 1, 2 bzw. 10a, 10b, 10c innerhalb des Bereichs 14; in diesem Beispiel liegt die innerste MTA-Zone 10a etwa halbkreisförmig vollständig, bereits die nächstäußere MTA-Zone 10b hingegen durch Abschnitte 13a der Schnittlinie 13 begrenzt, und die folgende MTA-Zone 10c als lediglich etwa dreieckförmige Segmente S zwischen der MTA-Zone 10b und den verbleibenden Abschnitten 13b der Schnittlinie 13 innerhalb des Bereichs 14. Alternativ könnte der gesamte Bereich 14 jedoch auch z.B. bloß in einer einzigen MTA-Zone 10a liegen. Sollte ein Laserscanner 3 für ein Durchdringen eine entferntere Position P' eines Körpers 8' ermitteln, so wird dieses Durchdringen bzw. der Körper 8' in dieser Ausführungsvariante ausgeblendet und damit nicht detektiert.

Die vorgegebenen Detektions-Bereiche 14 der Scanfächer 5 sind dabei bevorzugt in einer mit den Laserscannern 3 in Verbindung stehenden Datenbank 15 hinterlegt. Dabei kann die Datenbank 15 z.B. ein komplettes 3D-Modell der Scanhaube 7 enthalten oder lediglich für jeden Laserscanner 3 geometrische Informationen über die Abmessungen des für ihn definierten Bereichs 14.

Es versteht sich, dass, wenn gelegentliche Fehlalarme durch an der Scanhaube 7 vorbeifliegende Körper 8' in Kauf genommen werden, eine solche Unterteilung in Bereiche 14 entfallen kann; ferner könnten - mit und ohne Definition solcher Bereiche 14 - auch herkömmliche Laserscanner 3 anstelle der MTA-Zonen-selektiven Laserscanner 3 eingesetzt werden, insbesondere wenn eine geringe Pulswiederholrate ausreicht.

Wird das Durchdringen eines Scanfächers 3 detektiert, so wird z.B. eine Information darüber und/oder ein Alarm auf einem Ausgabegerät 16, z.B. einer Sirene, einem Bildschirm etc., ausgelöst. Dabei kann gemäß dem Beispiel von Fig. 5a für jeden Laserscanner 3 ein separates Ausgabegerät 16 vorgesehen sein, um ein Durchdringen zumindest auf einen bestimmten Scanfächer 5 genau lokalisieren zu können; es kann jedoch auch wie in Fig. 5b gezeigt ein gemeinsames Ausgabegerät 16 vorgesehen sein, auf welchem eine ungefähre Ortsangabe oder ggf. sogar die genaue Position P des Durchdringens dargestellt wird.

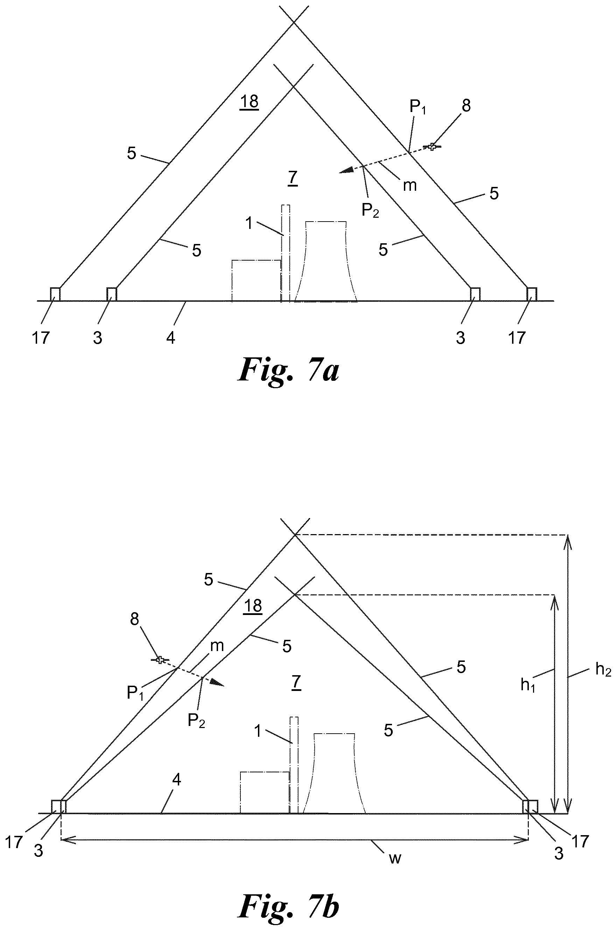

Gemäß den Fig. 7a und 7b sind optional am Boden 4 neben dem Objekt 1 weitere Laserscanner 17 mit nach oben, zumindest einer davon schräg nach oben, und einander schneidend ausgerichteten Scanfächern 5 angeordnet, wobei die Scanfächer 5 der weiteren Laserscanner 17 eine geschlossene, die genannte Scanhaube 7 einhüllende weitere Scanhaube 18 bilden. Die weitere Scanhaube 18 kann gemäß Fig. 7a von der Scanhaube 7 ringsum etwa gleich weit beanstandet sein; alternativ dazu haben die Scanhaube 7 und die weitere Scanhaube 18 gemäß Fig. 7b etwa gleiche Spannweite w, jedoch verschiedene Höhe h₁, h₂ oder überhaupt voneinander verschiedene Formen.

Wenn gewünscht, können sich die beiden Scanhauben 7, 18 in den Wellenlängenbereichen der sie jeweils bildenden Scanfächer 5 voneinander unterscheiden, sodass die Scanhaube 7 von Scanfächern 5 eines ersten Wellenlängenbereichs gebildet ist und die weitere Scanhaube 18 von Scanfächern 5 eines vom ersten verschiedenen zweiten Wellenlängenbereichs. Dabei können sich optional auch die Scanfächer 5 einer Scanhaube 7, 18 in ihrer Wellenlänge innerhalb des jeweiligen Wellenlängenbereichs von der Wellenlänge eines anderen Scanfächers 5 derselben Scanhaube 7, 18 unterscheiden, um Reflexionen besser zuordnen zu können.

Gemäß der Ausführungsform von Fig. 8 ist der Scanfächer 5 zumindest eines der Laserscanner 3, 17 optional zwischen einer ersten, steileren Ausrichtung mit einem Neigungswinkel α₁ und einer zweiten, flacheren Ausrichtung mit einem geringeren Neigungswinkel α₂ kippbar, wie dies in Fig. 5b durch die Kippantriebe 19 versinnbildlicht ist. Die Kippantriebe 19 werden dabei von einer z.B. in der Auswerteeinheit 12 ausgebildeten Ansteuereinheit 20 ausgelöst, welche nach Detektion eines Durchdringens des Scanfächers 5 eines Laserscanners 3 in der ersten Ausrichtung diesen in die zweite Ausrichtung kippt. Ein Zurückkippen erfolgt beispielsweise nach Ablauf einer vorgegebenen Zeitspanne. Das Kippen könnte ergänzend oder alternativ auch wetterabhängig, z.B. bei eingeschränkten Sichtbedingungen, erfolgen oder von anderen Faktoren, z.B. einer allgemeinen Gefährdungseinschätzung, abhängig sein.

Es versteht sich, dass kippbare Scanfächer 5 sowohl bei Einfach-Scanhauben 7 gemäß den Beispielen der Fig. 1 bis 4 als auch bei doppelten Scanhauben 7, 18 gemäß den Beispielen der Fig. 7a und 7b eingesetzt werden können. Dabei können, wenn gewünscht, auch die Bereiche 14 in der Datenbank 15 an die geänderte Form der Scanhaube(n) 7, 18 angepasst werden.

Anhand von aufeinanderfolgenden Detektionen in den beiden Scanhauben 7, 18 in den Beispielen der Fig. 7a oder 7b bzw. vor und nach dem Kippen des Scanfächers 5 im Beispiel der Fig. 8 kann optional die an die Laserscanner 3, 17 angeschlossene Auswerteeinheit 12 Richtung und/oder Geschwindigkeit, z.B. in Form einer Bewegungstrajektorie m, eines die Scanfächer 5 durchdringenden Körpers 8 ermitteln, u.zw. umso genauer, je genauer die jeweilige Position P₁, P₂ des Durchdringens der beiden Scanhauben 7, 18 bzw. des Scanfächers 5 vor und nach dem Kippen und der Zeitpunkt des Durchdringens detektiert werden.

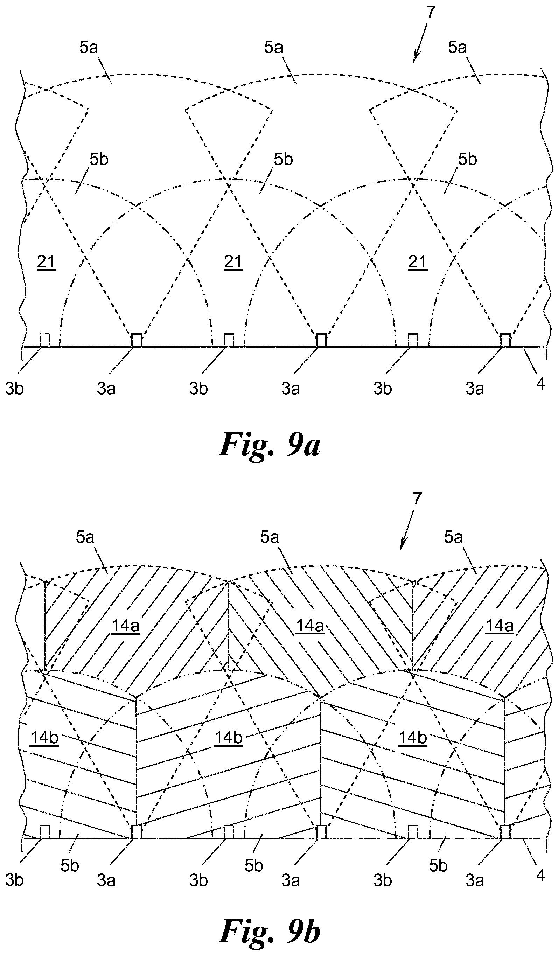

Gemäß den vereinfacht flächig dargestellten Beispielen der Fig. 9a und 9b kann die Scanhaube 7 und/oder gegebenenfalls die weitere Scanhaube 18 - hier anhand der Scanhaube 7 beschrieben - durch erste und zweite Laserscanner 3a, 3b gebildet werden, von denen die ersten Laserscanner 3a im Vergleich zu den zweiten 3b jeweils einen Scanfächer 5a mit kleinerem Fächerwinkel γ haben und die zweiten Laserscanner 3b mit ihren Scanfächern 5b zwischen zwei benachbarten ersten Laserscannern 3a - in diesem Beispiel in Bodennähe - verbleibende Zwickel 21 schließen. Dabei können die ersten Laserscanner 3a auch von den zweiten Laserscannern 3b verschiedene Neigungswinkel α haben. In der flächigen Darstellung der Fig. 9a und 9b ist der obere Abschluss der Scanhaube 7 bzw. 18 nicht ausgeführt.

Ähnlich wie in Fig. 9b durch verschiedene Schraffuren versinnbildlicht ist, können auch für die ersten bzw. zweiten Scanfächer 5a bzw. 5b verschiedene Bereiche 14a bzw. 14b vorgegeben werden, in welchen der jeweilige Laserscanner 3a, 3b ein Durchdringen eines Körpers 8 detektiert. Bevorzugt sind dabei die Bereiche 14a, 14b untereinander etwa flächengleich, um eine annähernd gleiche Orts- und Zeitauflösung der jeweiligen Laserscanner 3a, 3b erzielen zu können, und die Laserscanner 3a, 3b sind dazu MTA-selektiv.

Die Erfindung ist nicht auf die dargestellten Ausführungsformen beschränkt, sondern umfasst alle Varianten und Modifikation die in den Rahmen der angeschlossenen Ansprüche fallen.

## Patentansprüche

1. Vorrichtung zum Objektschutz mit zumindest zwei Laserscannern (3), welche dafür ausgebildet sind, jeweils einen dem Objekt (1) vorgelagerten Laserstrahl-Scanfächer (5) auszustrahlen und ein Durchdringen des Scanfächers (5) anhand einer an einem Körper (8) auftretenden Reflexion des Laserstrahls (6) des Scanfächers (5) zu detektieren, **dadurch gekennzeichnet, dass** die Laserscanner (3) am Boden (4) neben dem Objekt (1) mit nach oben, zumindest einer davon schräg nach oben, und einander schneidend ausgerichteten Scanfächern (5) angeordnet sind, wobei die Scanfächer (5) eine geschlossene, das Objekt (1) einhüllende Scanhaube (7) bilden.

2. Vorrichtung nach Anspruch 1, **dadurch gekennzeichnet, dass** die Laserscanner (3) MTA-Zonen-selektive Laserscanner (3) sind.

3. Vorrichtung nach Anspruch 1 oder 2, **dadurch gekennzeichnet, dass** jeder Laserscanner (3) dafür ausgebildet ist, die Position (P) des Durchdringens zu ermitteln und nur dann ein Durchdringen zu detektieren, wenn die ermittelte Position (P) innerhalb eines vorgegebenen, durch die anderen Scanfächer (5) der Scanhaube (7) definierten Bereichs (14) des Scanfächers (5) liegt.

4. Vorrichtung nach Anspruch 3, **dadurch gekennzeichnet, dass** die vorgegebenen Bereiche (14) in einer mit den Laserscannern (3) in Verbindung stehenden Datenbank (15) hinterlegt sind.

5. Vorrichtung nach einem der Ansprüche 1 bis 4, **dadurch gekennzeichnet, dass** am Boden (4) neben dem Objekt (1) weitere Laserscanner (17) mit nach oben, zumindest einer davon schräg nach oben, und einander schneidend ausgerichteten Scanfächern (5) angeordnet sind, wobei die Scanfächer (5) eine geschlossene, die genannte Scanhaube (7) einhüllende weitere Scanhaube (18) bilden.

6. Vorrichtung nach Anspruch 5, **dadurch gekennzeichnet, dass** die weitere Scanhaube (18) von der Scanhaube (7) ringsum etwa gleich weit beabstandet ist.

7. Vorrichtung nach Anspruch 5, **dadurch gekennzeichnet, dass** die Scanhaube (7) und die weitere Scanhaube (18) etwa gleiche Spannweite (w), jedoch verschiedene Höhe (h₁, h₂) haben.

8. Vorrichtung nach einem der Ansprüche 5 bis 7, **dadurch gekennzeichnet, dass** sich die beiden Scanhauben (7, 18) voneinander in den Wellenlängenbereichen der sie jeweils bildenden Scanfächer (5) unterscheiden.

9. Vorrichtung nach einem der Ansprüche 5 bis 8, **dadurch gekennzeichnet, dass** sie eine an die Laserscanner (3, 17) angeschlossene Auswerteeinheit (12) zum Ermitteln von Richtung und/oder Geschwindigkeit eines die Scanhauben (7, 18) durchdringenden Körpers (8) anhand von aufeinanderfolgenden Detektionen in den beiden Scanhauben (7, 18) umfasst.

10. Vorrichtung nach einem der Ansprüche 1 bis 9, **dadurch gekennzeichnet, dass** der Scanfächer (5) zumindest eines der Laserscanner (3, 17) zwischen einer ersten, steileren Ausrichtung und einer zweiten, flacheren Ausrichtung kippbar ist.

11. Vorrichtung nach Anspruch 10, **dadurch gekennzeichnet, dass** sie eine Ansteuereinheit (20) umfasst, welche dazu ausgebildet ist, nach Detektion eines Durchdringens des Scanfächers (5) in der ersten Ausrichtung diesen in die zweite Ausrichtung zu kippen.

12. Vorrichtung nach Anspruch 11, **dadurch gekennzeichnet, dass** sie eine Auswerteeinheit (12) zum Ermitteln von Richtung und/oder Geschwindigkeit eines einen Scanfächer (5) durchdringenden Körpers (8) anhand von aufeinanderfolgenden Detektionen vor und nach dem Kippen des Scanfächers (5) umfasst.

13. Vorrichtung nach einem der Ansprüche 1 bis 12, **dadurch gekennzeichnet, dass** die zumindest eine Scanhaube (7, 18) durch erste und zweite Laserscanner (3a, 3b) gebildet ist, wobei die ersten Laserscanner (3a) im Vergleich zu den zweiten jeweils einen Scanfächer (5a) mit kleinerem Fächerwinkel (γ) haben und die zweiten Laserscanner (3b) zwischen zwei benachbarten ersten Laserscannern (3a) verbleibende Zwickel (21) schließen.

14. Vorrichtung nach einem der Ansprüche 1 bis 13, **dadurch gekennzeichnet, dass** zumindest einer der Laserscanner (3, 17) einen kegelmantelsektorförmig gekrümmten Scanfächer (5) hat.

15. Vorrichtung nach einem der Ansprüche 1 bis 13, **dadurch gekennzeichnet, dass** jeder der Laserscanner (3, 17) einen ebenen Scanfächer (5) hat, wobei jede Scanhaube (7, 18) durch die Scanfächer (5) zumindest dreier Laserscanner (3, 17) gebildet ist.

16. Vorrichtung nach einem der Ansprüche 1 bis 15, **dadurch gekennzeichnet, dass** zum Einhüllen eines langgestreckten Objekts (1) entlang dessen Längsseiten (L) jeweils zumindest zwei Laserscanner (3, 17) angeordnet sind.

## Claims

1. A device for object protection comprising at least two laser scanners (3), which are configured to each emit a laser beam scanning fan (5) in front of the object (1) and to detect a penetration of the scanning fan (5) by means of a reflection of the laser beam (6) of the scanning fan (5) occurring on a body (8), **characterised in that** the laser scanners (3) are arranged on the ground (4) next to the object (1) and have scanning fans (5) which are oriented upwardly, at least one of which is oriented upwardly at an incline, and which intersect one another, wherein the scanning fans (5) form a closed scanning hood (7) covering the object (1).

2. The device according to Claim 1, **characterised in that** the laser scanners (3) are MTA zone-selective laser scanners (3).

3. The device according to Claim 1 or 2, **characterised in that** each laser scanner (3) is configured to determine the position (P) of penetration and to only detect a penetration when the determined position (P) lies within a predefined region (14) of the scanning fan (5), said region being defined by the other scanning fans (5) of the scanning hood (7).

4. The device according to Claim 3, **characterised in that** the predefined regions (14) are stored in a database (15) connected to the laser scanners (3).

5. The device according to any one of the Claims 1 to 4, **characterised in that** further laser scanners (17) having upwardly oriented scanning fans (5), at least one of which is oriented upwardly at an incline, and which intersect one another, are arranged on the ground (4) next to the object (1), wherein the scanning fans (5) form a closed further scanning hood (18) covering said scanning hood (7).

6. The device according to Claim 5, **characterised in that** the further scanning hood (18) is arranged around the scanning hood (7) at approximately constant distance therefrom.

7. The device according to Claim 5, **characterised in that** the scanning hood (7) and the further scanning hood (18) have approximately the same width (w) but different heights (h₁, h₂).

8. The device according to any one of the Claims 5 to 7, **characterised in that** the two scanning hoods (7, 18) differ from one another in terms of the wavelength ranges of the scanning fans (5) forming said scanning hoods.

9. The device according to any one of the Claims 5 to 8, **characterised in that** it comprises an evaluation unit (12) connected to the laser scanners (3, 17) for determining the direction and/or speed of a body (8) penetrating the scanning hoods (7, 18) on the basis of successive detections in the two scanning hoods (7, 18).

10. The device according to any one of the Claims 1 to 9, **characterised in that** the scanning fan (5) of at least one of the laser scanners (3, 17) can be tilted between a first, steeper orientation and a second, less steep orientation.

11. The device according to Claim 10, **characterised in that** it comprises a control unit (20), which is configured to tilt the scanning fan (5) into the second orientation following the detection of a penetration of said scanning fan (5) in the first orientation.

12. The device according to Claim 11, **characterised in that** it comprises an evaluation unit (12) for determining the direction and/or speed of a body (8) penetrating a scanning fan (5) on the basis of successive detections before and after the tilting of the scanning fan (5).

13. The device according to any one of the Claims 1 to 12, **characterised in that** the at least one scanning hood (7, 18) is formed by first and second laser scanners (3a, 3b), wherein the first laser scanners (3a), compared to the second, each have a scanning fan (5a) having a smaller fan angle (γ) and the second laser scanners (3b) close gussets (21) remaining between two adjacent first laser scanners (3a).

14. The device according to any one of the Claims 1 to 13, **characterised in that** at least one of the laser scanners (3, 17) has a scanning fan (5) curved in the shape of a sector of the lateral surface of a cone.

15. The device according to any one of the Claims 1 to 13, **characterised in that** each of the laser scanners (3, 17) has a flat scanning fan (5), wherein each scanning hood (7, 18) is formed by the scanning fans (5) of at least three laser scanners (3, 17).

16. The device according to any one of the Claims 1 to 15, **characterised in that**, for covering an elongate object (1), at least two laser scanners (3, 17) are arranged along each of the longitudinal sides (L) of said object.

## Revendications

1. Dispositif de protection d'objet avec au moins deux scanners laser (3), chacun desquels étant conçu pour émettre un éventail de balayage de faisceau laser (5) placé devant l'objet (1) et pour détecter une pénétration de l'éventail de balayage (5) à l'aide d'une réflexion du faisceau laser (6) de l'éventail de balayage (5) se produisant sur un corps (8), **caractérisé en ce que** les scanners laser (3) sont disposés sur le sol (4), à côté de l'objet (1), avec des éventails de balayage (5) orientés vers le haut, au moins l'un d'entre eux orienté incliné vers le haut, et en se coupant, où les éventails de balayages (5) forment un casque de balayage (7) fermé enveloppant l'objet (1).

2. Dispositif selon la revendication 1, **caractérisé en ce que** les scanners laser (3) sont des scanners lasers sélectifs de zones MTA (3).

3. Dispositif selon la revendication 1 ou 2, **caractérisé en ce que** chaque scanner laser (3) est conçu pour déterminer la position (P) de la pénétration et seulement détecter une pénétration lorsque la position (P) déterminée se situe à l'intérieur d'un domaine (14) de l'éventail de balayage (5) prédéterminé défini par les autres éventails de balayage (5) du casque de balayage (7).

4. Dispositif selon la revendication 3, **caractérisé en ce que** les domaines (14) prédéterminés sont stockés dans une banque de données (15) étant en relation avec les scanners laser (3).

5. Dispositif selon l'une des revendications 1 à 4, **caractérisé en ce que**, sur le sol (4), à côté de l'objet (1), des scanners laser (17) supplémentaires sont disposés avec des éventails de balayage (5) orientés vers le haut, au moins l'un d'entre eux orienté incliné vers le haut, et en se coupant, où les éventails de balayage (5) forment un autre casque de balayage (18) fermé enveloppant ledit casque de balayage (7).

6. Dispositif selon la revendication 5, **caractérisé en ce que** l'autre casque de balayage (18) est placé tout autour du casque de balayage (7) avec un écartement environ égal.

7. Dispositif selon la revendication 5, **caractérisé en ce que** le casque de balayage (7) et l'autre casque de balayage (18) ont à peu près la même envergure (w), mais ont des hauteurs différentes (h₁, h₂).

8. Dispositif selon l'une des revendications 5 à 7, **caractérisé en ce que** les deux casques de balayage (7, 18) sont différents l'un de l'autre dans les domaines de longueurs d'ondes des éventails de balayage (5) qui les forment respectivement.

9. Dispositif selon l'une des revendications 5 à 8, **caractérisé en ce qu'**il comprend une unité de calcul (12) associée aux scanners laser (3, 17) pour la détermination de la direction et/ou de la vitesse d'un corps (8) traversant les casques de balayage (7, 18) à l'aide de détections successives dans les deux casques de balayage (7, 18).

10. Dispositif selon l'une des revendications 1 à 9, **caractérisé en ce que** l'éventail de balayage (5) d'au moins un des scanners laser (3, 17) peut basculer entre une première orientation plus abrupte et une deuxième orientation plus plane.

11. Dispositif selon la revendication 10, **caractérisé en ce qu'**il comprend une unité de commande (20), laquelle est conçue, après la détection d'une pénétration de l'éventail de balayage (5) dans une première orientation, pour basculer celui-ci vers la deuxième orientation.

12. Dispositif selon la revendication 11, **caractérisé en ce qu'**il comprend une unité de calcul (12) pour la détermination de la direction et/ou de la vitesse d'un corps (8) traversant un éventail de balayage (5) à l'aide de détections successives en avant et après le basculement de l'éventail de balayage (5).

13. Dispositif selon l'une des revendications 1 à 12, **caractérisé en ce que** l'au moins un casque de balayage (7, 18) est formé par des premiers et des deuxièmes scanners laser (3a, 3b), où les premiers scanners laser (3a), comparativement aux deuxièmes, ont respectivement un éventail de balayage (5a) avec un angle d'éventail (γ) plus petit et les deuxièmes scanners laser (3b) renferment un soufflet (21) restant entre deux premiers scanners laser (3a) voisins.

14. Dispositif selon l'une des revendications 1 à 13, **caractérisé en ce qu'**au moins un des scanners laser (3, 17) a un éventail de balayage (5) courbe en forme d'un secteur du manteau d'un cône.

15. Dispositif selon l'une des revendications 1 à 13, **caractérisé en ce que** chacun des scanners laser (3, 17) a un éventail de balayage (5) plan, où chaque casque de balayage (7, 18) est formé par les éventails de balayage (5) d'au moins trois scanners laser (3, 17).

16. Dispositif selon l'une des revendications 1 à 15, **caractérisé en ce que**, pour envelopper un objet (1) oblong au moins deux scanners laser (3, 17) sont disposés le long de chacun de ses côtés longitudinaux (L).
